# EUROPEAN PATENT APPLICATION

(11) **EP 4 512 971 A1**
(43) Date of publication of application: **26.02.2025**
(21) Application number: 24195924.6
(22) Date of filing: 22.08.2024
(51) Int. Cl.: E04B 1/80

(54) **VACUUM HEAT INSULATING PANEL**

(30) Priority: 24.08.2023 JP 2023136615
(71) Applicant: Ideal Brain Co., Ltd., Tokyo 102-0083 (JP)
(72) Inventor: MATSUNAGA, Tomoya, Chiyoda-ku, 1020083 (JP); OSHIMA, Kazuhito, Chiyoda-ku, 1020083 (JP); SATO, Takanori, Chiyoda-ku, 1020083 (JP)
(74) Representative: Lewis Silkin LLP

(57) **Abstract**

A vacuum heat insulating panel, in which a pair of plate members face each other in a manner that an internal space is formed between the plate members, includes: a first plate member; a second plate member configured to form an internal space between the first plate member and the second plate member; and a spacer configured to support the first plate member and the second plate member. The first plate member includes a first outer edge plate portion, a standing plate portion standing from the first outer edge plate portion and formed by a curved surface, and a main plate portion continuous from the standing plate portion and supported by the spacer. A first resin material having a gas barrier property is interposed between the first outer edge plate portion and a second outer edge plate portion on an outer edge side of the second plate member.

## Description

### BACKGROUND

### 1. Field of the Invention

The present disclosure relates to a vacuum heat insulating panel used for a building.

### 2. Description of the Related Art

When providing a heat insulating wall in a building such as a house, buildings, a factory, and a warehouse, it is implemented by attaching a heat insulating panel. The heat insulating panel is obtained by laminating a heat insulating material in an internal space formed by a pair of surface materials, or by performing on-site foaming, and as a structure more excellent in heat insulating properties, there is conventionally known a vacuum heat insulating panel obtained by evacuating the internal space. On the other hand, in the vacuum heat insulating panel, depending on a material or structure, the surface material may be deformed due to a pressure difference between the internal space and an atmospheric pressure, and the heat insulating property may be greatly decreased due to contact between the surface materials.

JP2004-211376A discloses a vacuum heat insulating panel in which protruding portions formed by protruding surfaces of a pair of titanium thin plates facing each other in a substantially hemispherical shape are brought into contact with each other. JP2013-170652A discloses a vacuum heat insulating panel which is implemented with an interliner material having a heat insulating property and an outer covering metal plate which covers the periphery of the interliner material, and which is sealed at the peripheral edge portion of the outer covering metal plate with the inside thereof being in a vacuum state.

According to the vacuum heat insulating panel disclosed in JP2004-211376A, the protruding portions are brought into contact with each other, and thus deformation of the titanium thin plate can be prevented. However, the vacuum heat insulating panel disclosed in JP2004-211376A has a problem that, since the hemispherical protruding portions are brought into contact with each other in addition to the outer edge portion required to be joined, the heat insulating property is decreased when the contact portions are displaced due to aging or external pressure. According to the vacuum heat insulating panel disclosed in JP2013-170652A, the inside is filled with the interliner material, and formation of a vacuum layer is not assumed. Therefore, there is a problem that an improvement of the heat insulating property due to the vacuum layer cannot be realized. JP2004-211376A and JP2013-170652A disclose a structure obtained by joining facing metal plates by welding. For example, in a case in which welding is performed by bringing a welding tool into a vacuum chamber, there is a problem that the vacuum heat insulating panel is high in manufacturing cost and low in manufacturability.

### SUMMARY

The present disclosure has been made in view of the problems described above, and an object of the present disclosure is to provide a vacuum heat insulating panel of which manufacturability is improved.

According to a first aspect of the present disclosure, there is provided a vacuum heat insulating panel in which a pair of plate members face each other in a manner that an internal space is formed between the plate members, including: a first plate member made of metal; a second plate member made of metal and configured to form an internal space between the first plate member and the second plate member; and a spacer configured to support the first plate member and the second plate member from the internal space side, in which: the first plate member includes a first outer edge plate portion on an outer edge side, a standing plate portion standing from the first outer edge plate portion and formed by a curved surface, and a main plate portion continuous from the standing plate portion and supported by the spacer; and a first resin material having a gas barrier property is interposed between the first outer edge plate portion and a second outer edge plate portion on an outer edge side of the second plate member.

According to a second aspect of the present disclosure, in the first aspect, the spacer is a resin material and is separated from the first outer edge plate portion and the second outer edge plate portion.

According to a third aspect of the present disclosure, in the first aspect or the second aspect, a second resin material having a thermal conductivity lower than that of the first resin material is interposed between the first outer edge plate portion and the second outer edge plate portion.

According to a fourth aspect of the present disclosure, in the first aspect or the second aspect, the spacer includes: a plate-shaped first support portion extending along the first plate member and configured to support the first plate member; a plate-shaped second support portion extending along the second plate member in a manner of forming a hollow space between the second support portion and the first support portion and configured to support the second plate member; and a plurality of third support portions configured to support the first support portion and the second support portion from the hollow space side, and the plurality of third support portions extend in one direction and are integrally molded with the first support portion and the second support portion.

According to a fifth aspect of the present disclosure, in the first aspect or the second aspect, the first resin material is interposed only between the first outer edge plate portion and the second outer edge plate portion.

According to a sixth aspect of the present disclosure, in the first aspect or the second aspect, the second plate member includes a bending portion bent between the first outer edge plate portion and the spacer.

According to a seventh aspect of the present disclosure, in the first aspect, the first outer edge plate portion and the second outer edge plate portion are welded by the first resin material. According to an eighth aspect of the present disclosure, in the seventh aspect, the first outer edge plate portion and the second outer edge plate portion are welded.

According to the first to eighth aspects of the present disclosure, the first resin material having a gas barrier property is interposed between the first outer edge plate portion of the first plate member made of metal and the second outer edge plate portion of the second plate member made of metal. That is, the metal plates can be joined to each other at a temperature lower than a welding temperature. Therefore, it is possible to join the metal plate members in a vacuum chamber with a lower cost and a shorter time than a case in which a welding tool is used in the vacuum chamber. Accordingly, manufacturability of the vacuum heat insulating panel can be improved. In the first plate member, the standing plate portion is formed by a curved surface. Therefore, an external pressure applied to the first plate member is easily released by a shell structure. Accordingly, durability of the vacuum heat insulating panel can be improved. In a state in which a first plate member 1 and a second plate member 2 are joined by the first resin material 3, the first plate member 1 and the second plate member 2 can be joined more firmly by welding the outer edge side outside of the vacuum chamber.

In particular, according to the second aspect of the present disclosure, the spacer is a resin material and is separated from the first outer edge plate portion and the second outer edge plate portion. Therefore, while the plate members are supported by the spacer made of the resin material having a thermal conductivity lower than that of metal, heat is less likely to be conducted from the outer edge side to the spacer during joining the plate members, and thus the spacer is less likely to be deformed or evaporated in the internal space. Accordingly, it is possible to improve the manufacturability while improving the heat insulating property of the vacuum heat insulating panel.

In particular, according to the third aspect of the present disclosure, the second resin material is interposed between the first outer edge plate portion and the second outer edge plate portion. Therefore, a thickness of the resin material is easily secured, and heat is less likely to be conducted between the plate members. Accordingly, the heat insulating property of the vacuum heat insulating panel can be improved.

In particular, according to the fourth aspect of the present disclosure, the spacer includes the plate-shaped second support portion extending along the second plate member in a manner of forming a hollow space between the second support portion and the first support portion and configured to support the second plate member, and the third support portion extending in one direction and is integrally molded with the first support portion and the second support portion. Therefore, a vacuum layer can be formed in the hollow space. Accordingly, the heat insulating property of the vacuum heat insulating panel can be improved. The first support portion, the second support portion, and the third support portion can be easily manufactured by extrusion molding or the like. Accordingly, the manufacturability of the vacuum heat insulating panel can be further improved.

In particular, according to the fifth aspect of the present disclosure, the first resin material is interposed only between the first outer edge plate portion and the second outer edge plate portion. Therefore, it is easy to prevent an influence on a vacuum state of the internal space due to heating and evaporating of the first resin material. Accordingly, a decrease in the heat insulating property of the vacuum heat insulating panel can be prevented.

In particular, according to the sixth aspect of the present disclosure, the second plate member includes a bending portion bent between the first outer edge plate portion and the spacer. Therefore, the second plate member can be deformed following deformation accompanying heating of the first plate member, and wrinkles and cracks are less likely to occur. Accordingly, a decrease in the heat insulating property of the vacuum heat insulating panel can be prevented.

### BRIEF DESCRIPTION OF THE DRAWINGS

The present disclosure will become more fully understood from the detailed description given hereinbelow and the accompanying drawing which is given by way of illustration only, and thus is not limitative of the present disclosure and wherein:
Figs. 1A to 1D are schematic views illustrating an example of a vacuum heat insulating panel according to the present embodiment, in which Fig. 1A is a plan view, Fig. 1B is a cross-sectional view taken along line A-A in Fig. 1A, Fig. 1C is a partially enlarged cross-sectional view of Fig. 1B, and Fig. 1D is a cross-sectional view taken along line B-B in Fig. 1A;
Figs. 2A to 2C are schematic views illustrating a first modification of the vacuum heat insulating panel according to the present embodiment, in which Fig. 2A is a plan view, Fig. 2B is a partially enlarged cross-sectional view, and Fig. 2C is a cross-sectional view taken along line C-C in Fig. 2A;
Figs. 3A to 3D are schematic views illustrating a second modification to a fifth modification of the vacuum heat insulating panel according to the present embodiment;
Figs. 4A to 4C are schematic views illustrating a sixth modification to an eighth modification of the vacuum heat insulating panel according to the present embodiment, and Figs. 4D and 4E are schematic views illustrating a ninth modification of the vacuum heat insulating panel according to the present embodiment; and
Figs. 5A and 5B are schematic views illustrating an example of a manufacturing method of the vacuum heat insulating panel according to the present embodiment, in which Fig. 5A is a cross-sectional view, and Fig. 5B is a partially enlarged cross-sectional view of Fig. 5A.

### DETAILED DESCRIPTION OF THE INVENTION

Hereinafter, an example of a vacuum heat insulating panel 100 according to an embodiment of the present disclosure will be described in detail with reference to the drawings. In the drawings, a first direction X is defined, one direction intersecting the first direction X, for example, orthogonal thereto is defined as a second direction Y, and a direction intersecting with each of the first direction X and the second direction Y, for example, orthogonal thereto is defined as a thickness direction Z. Configurations in the drawings are schematically illustrated for the sake of description, and may be different from each other in, for example, a size of each configuration, a comparison of the size of each configuration.

### (Vacuum Heat Insulating Panel 100)

An example of the vacuum heat insulating panel 100 according to the present embodiment will be described with reference to the drawings.

The vacuum heat insulating panel 100 is used, for example, in a heat insulating wall of a building such as a house, buildings, a factory, and a warehouse. The vacuum heat insulating panel 100 is fixed to, for example, an outdoor side of a structural plate.

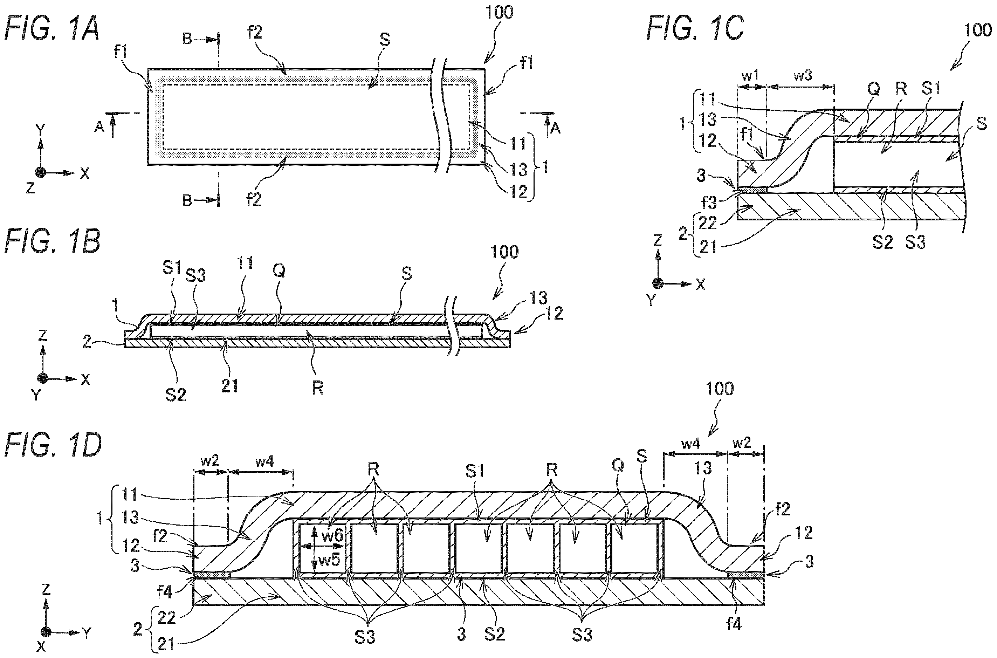

The vacuum heat insulating panel 100 includes a pair of plate members facing each other. For example, as illustrated in Figs. 1A to 1D, the vacuum heat insulating panel 100 includes a first plate member 1, a second plate member 2, a first resin material 3, and a spacer S. The vacuum heat insulating panel 100 is implemented in a manner that, for example, the first plate member 1 and the second plate member 2 face each other. The vacuum heat insulating panel 100 extends in a planar direction including the first direction X and the second direction Y

In the vacuum heat insulating panel 100, for example, the spacer S is provided in an internal space Q formed between the first plate member 1 and the second plate member 2. In the vacuum heat insulating panel 100, the first plate member 1 and the second plate member 2 are joined to each other via the first resin material 3 in an outer edge region, and a vacuum layer maintained in vacuum is formed in the internal space Q.

Vacuum in the present disclosure means a state in which a pressure is reduced to be lower than an atmospheric pressure, that is, a negative pressure. Specifically, for example, vacuum refers to vacuum described in ISO 3529-1 or JIS Z 8161-2, and includes low vacuum, medium vacuum, high vacuum, and ultra-high vacuum. By forming the vacuum layer, thermal conduction due to air convection in the internal space Q becomes very small. Accordingly, a heat insulating property can be improved as compared with a region in which the plate members 1 and 2 are in contact with each other. In addition, although an external force that causes the first plate member 1 to deform toward the second plate member 2 is applied due to the negative pressure in the internal space Q as the vacuum layer is formed, sufficient strength against the external force can be obtained by being supported by the spacer S.

Regarding dimensions of the vacuum heat insulating panel 100, for example, a length in the first direction X is about 1.5 m to 3 m, a length in the second direction Y is about 450 mm, and a thickness in the thickness direction Z is about 8 mm to 20 mm.

### <First Plate Member 1>

An inner surface of the first plate member 1 facing the internal space Q is supported by the spacer S.

As a material for the first plate member 1, for example, metal such as aluminum or stainless steel (SUS304) is used.

For example, as illustrated in Fig. 1A, the first plate member 1 has a rectangular shape in plan view. For example, as illustrated in Fig. 1B, the first plate member 1 is joined to the second plate member 2 in the outer edge region, and is separated from the second plate member 2 in a central region.

For example, as illustrated in Fig. 1C, the first plate member 1 includes a first main plate portion 11, a first outer edge plate portion 12, and a standing plate portion 13. The first plate member 1 is joined to the second plate member 2 at the first outer edge plate portion 12, and is separated from the second plate member 2 at the first main plate portion 11 and the standing plate portion 13. The first main plate portion 11 is supported by the first outer edge plate portion 12 via the standing plate portion 13. The first main plate portion 11 is formed in a flat plate shape without unevenness, for example. The standing plate portion 13 stands from the first outer edge plate portion 12 and is formed by a curved surface. The first main plate portion 11 is continuous with the standing plate portion 13 and is supported by the spacer S.

In the first plate member 1, for example, the standing plate portion 13 is formed by a curved surface. In this case, an external pressure applied to the first plate member 1 is easily released by a shell structure. Accordingly, durability of the vacuum heat insulating panel 100 can be improved. Since the standing plate portion 13 has a smooth curved surface shape and does not have a fold line, the curved surface shape region is hatched in Fig. 1A.

In the first outer edge plate portion 12, a surface that is exposed to the outside on a short side of the rectangle is referred to as a first main surface f1, and a surface that is exposed to the outside on a long side of the rectangle is referred to as a second main surface f2. In the first outer edge plate portion 12, a surface opposite to the first main surface f1 and in contact with the second plate member 2 is defined as a third main surface f3, and a surface opposite to the second main surface f2 and in contact with the second plate member 2 is defined as a fourth main surface f4. In this case, in the first plate member 1, by heating the exposed main surfaces f1 and f2 in a state in which a resin material (including the first resin material 3 described later) is interposed between the second plate member 2 and the main surfaces f3 and f4 that are in contact with the second plate member 2, the resin material is melted by heat conducted through the main surfaces f3 and f4. Thereafter, the melted resin material is solidified by cooling the vacuum heat insulating panel 100, and the main surfaces f3 and f4 and the second plate member 2 can be joined to each other by welding.

A width w1 of the first main surface f1 in the first direction X is, for example, about 20 mm. A width w2 of the second main surface f2 in the second direction Y is, for example, about 20 mm.

A thickness of the first plate member 1 in the thickness direction Z is, for example, about 0.1 mm to 2.0 mm, and particularly preferably about 0.2 mm. A rising width of the first main plate portion 11 in the thickness direction Z with respect to the first outer edge plate portion 12 of the first plate member 1 is, for example, about 1.0 mm to 20.0 mm, and particularly preferably about 7.5 mm.

### <Second Plate Member 2>

An inner surface of the second plate member 2 facing the internal space Q is supported by the spacer S. For example, a material similar to that of the first plate member 1 may be used as a material for the second plate member 2.

The second plate member 2 has, for example, a rectangular shape in plan view. For example, as illustrated in Fig. 1B, the second plate member 2 is in contact with an outer edge of the first plate member 1 in the outer edge region, and is separated from the first plate member 1 in the central region.

For example, as illustrated in Fig. 1C, the second plate member 2 includes a second main plate portion 21 and a second outer edge plate portion 22. The second plate member 2 is joined to the first outer edge plate portion 12 at the second outer edge plate portion 22 via the first resin material 3, and is separated from the first main plate portion 11 and the standing plate portion 13 at the main plate portion 21. The second main plate portion 21 and the second outer edge plate portion 22 are formed in a flat plate shape without unevenness, for example.

The second plate member 2 may include, for example, a standing plate portion corresponding to the standing plate portion 13. In this case, the second main plate portion 21 is supported by the second outer edge plate portion 22 via the standing plate portion. The second plate member 2 is joined to the first plate member 1 by heating the first resin material 3 on a surface of the second outer edge plate portion 22 and joining the outer edge plate portion and the first outer edge plate portion 12.

A thickness of the second plate member 2 in the thickness direction Z is, for example, about 0.1 mm to 2.0 mm, and particularly preferably about 0.3 mm.

### <First Resin Material 3>

The first resin material 3 is made of a thermoplastic resin or a thermosetting resin, and has a gas barrier property. A resin having a gas barrier property refers to a resin having a gas permeability that satisfies, in the gas permeability test described in ISO 15105-1 (Plastics-Film and sheeting-Determination of gas-transmission rate-Part 1: Differential-pressure method), an oxygen permeability of 5 L/(m² · 24h · atm) or less in an environment of a temperature of 23°C and a humidity of 0% (0% RH) and a water vapor permeability of 50 g/(m² · 24h) or less, for example. As the first resin material 3, for example, an ethylene-vinyl alcohol copolymer (EVOH), polyvinylidene chloride (PVDC) or the like is used. The first resin material 3 may be a synthetic c rubber-based hot melt adhesive with equivalent gas permeability. The synthetic rubber-based hot melt adhesive is an adhesive obtained by kneading synthetic rubber, a tackifier resin, a plasticizer, and the like.

The first plate member 1 and the second plate member 2 are joined to each other by heating the outer edge side (for example, the first outer edge plate portion 12 or the second outer edge plate portion 22) in a state in which the first resin material 3 is interposed between the first outer edge plate portion 12 and the second outer edge plate portion 22. That is, the plate members 1 and 2 made of metal can be joined to each other at a temperature lower than a welding temperature. In this case, the metal plates can be joined to each other with a lower cost and a shorter time than a case in which a welding tool is used in a vacuum chamber. Accordingly, the manufacturability of the vacuum heat insulating panel 100 can be improved. In a state in which the first plate member 1 and the second plate member 2 are joined by the first resin material 3, the first plate member 1 and the second plate member 2 can be joined more firmly by welding the outer edge side outside of the vacuum chamber.

For example, the first resin material 3 may be provided only on the second outer edge plate portion 22 among the surfaces of the second plate member 2 facing the first plate member 1. That is, the first resin material 3 is interposed only between the first outer edge plate portion 12 and the second outer edge plate portion 22. In this case, it is easy to prevent an influence on a vacuum state of the internal space Q due to heating and evaporating of the first resin material 3. Accordingly, a decrease in the heat insulating property of the vacuum heat insulating panel 100 can be prevented. In this case, the first resin material 3 may be provided on the third main surface f3 of the first outer edge plate portion 12.

### <Spacer S>

For example, as illustrated in Figs. 1C and 1D, the spacer S includes a first support portion S1 that supports the first plate member 1, a second support portion S2 that supports the second plate member 2, and a plurality of third support portions S3 that support the support portions S1 and S2.

The first support portion S1 has, for example, a plate shape, and extends along the first plate member 1. The first support portion S1 is in surface contact with the first plate member 1, for example, and supports the first plate member 1 on a contact surface thereof.

The second support portion S2 has, for example, a plate shape, and extends along the second plate member 2. The second support portion S2 is separated from the first support portion S1 in a manner of forming a hollow space R with the first support portion S1. The second support portion S2 is in surface contact with the second plate member 2 or the first resin material 3 positioned on a surface of the second plate member 2, for example, and supports the second plate member 2 on a contact surface thereof. For example, as illustrated in Fig. 1C, the second support portion S2 may support the second plate member 2 via the first resin material 3 or may directly support the second plate member 2. The hollow space R indicates a region excluding a region occupied by the spacer S in the internal space Q.

The plurality of third support portions S3 support the first support portion S1 and the second support portion S2 from the hollow space R side. For example, as illustrated in Fig. 1D, the plurality of third support portions S3 maintain the hollow space R by supporting loads applied from the first support portion S1 and the second support portion S2 toward the hollow space R side along the thickness direction Z.

With configurations of the support portions S1 to S3, the spacer S can form the hollow space R between the first plate member 1 and the second plate member 2. In this case, a vacuum layer can be formed in the hollow space R. Accordingly, the heat insulating property of the vacuum heat insulating panel 100 can be improved. Further, the support portions S1 and S2 support the first plate member 1 and the second plate member 2, respectively, and thus even if one of the support portions of the plate members 1 and 2 is displaced, the hollow space R can be maintained. Accordingly, a decrease in the heat insulating property of the vacuum heat insulating panel 100 can be prevented.

For example, as illustrated in Fig. 1C, the plurality of third support portions S3 may have a plate shape, may extend in one direction (the first direction X in Fig. 1D), and may be integrally formed with the first support portion S1 and the second support portion S2. In this case, the first support portion S1, the second support portion S2, and the third support portion S3 can be easily manufactured by extrusion molding or the like. Accordingly, the manufacturability of the vacuum heat insulating panel 100 can be further improved.

As a material for the spacer S, for example, a plastic (synthetic resin) described in ISO1043-1 or JIS K 6899-1 is used. In the vacuum heat insulating panel 100, since the plate members 1 and 2 are supported by the spacer S made of a resin having a thermal conductivity lower than that of metal, when metal having a strength higher than that of a resin is used for the plate members 1 and 2, an area in which the metal plates are in contact with each other can be reduced as compared with a case in which the spacer S is not used. Accordingly, it is possible to improve the heat insulating property while improving the durability of the vacuum heat insulating panel 100.

The spacer S is separated from, for example, the first outer edge plate portion 12. In this case, while the plate members 1 and 2 are supported by the spacer S made of the resin material having a thermal conductivity lower than that of metal, heat is less likely to be conducted from the outer edge side to the spacer S during joining the plate members 1 and 2, and thus the spacer S is less likely to be deformed or evaporated in the internal space Q. Accordingly, it is possible to improve the manufacturability while improving the heat insulating property of the vacuum heat insulating panel 100.

Regarding a separation distance between the spacer S and the first outer edge plate portion 12, a separation width w3 along the first direction X from the third main surface f3 is, for example, about 10 mm to 20 mm. A separation width w4 along the second direction Y from the fourth main surface f4 is, for example, about 10 mm to 20 mm.

Regarding dimensions of the spacer S, for example, a length in a longitudinal direction (the first direction X in Figs. 1A to 1D) of the first support portion S1 is about 1460 mm, a length in a short direction (the second direction Y in Figs. 1A to 1D) is about 372.5 mm, and a thickness is 0.5 mm. Dimensions of the second support portion S2 may be, for example, the same as that of the first support portion S1.

Regarding dimensions of the third support portion S3, for example, a length in the longitudinal direction (the first direction X in Figs. 1A to 1D) is the same as that of the first support portion S1, a thickness in the second direction Y is about 0.5 mm, and a width w5 in a short direction (the thickness direction Z in Figs. 1A to 1D) is about 10 mm. The width w5 of the third support portion S3 is the same as the separation width between the first support portion S1 and the second support portion S2. A width w6 of the adjacent third support portions S3 is, for example, about 12 mm.

### (First Modification of Vacuum Heat Insulating Panel 100)

### <Second Plate Member 2>

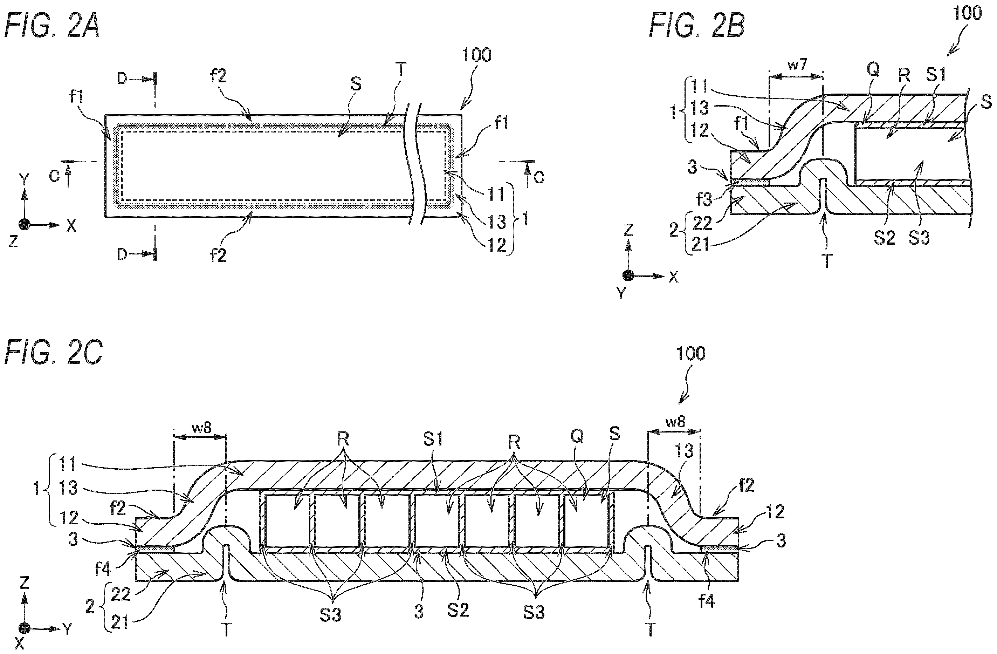

For example, as illustrated in Figs. 2A to 2C, the second plate member 2 includes a protruding bending portion T bent toward the standing plate portion 13 in a region facing the standing plate portion 13 between the first outer edge plate portion 12 and the spacer S. In Fig. 2A, a region of the bending portion T indicated by an alternate long and short dash line overlaps a region of the curved surface shape of the standing plate portion 13 indicated by shading in plan view. The bending portion T is elastically deformed or plastically deformed by, for example, external pressures in the first direction X and the second direction Y The bending portion T may be provided in a region facing the first main plate portion 11 between the first outer edge plate portion 12 and the spacer S. The bending portion T may be provided between the first resin material 3 and the spacer S. Although not illustrated, the bending portion T may have a groove shape bent toward a side opposite to the standing plate portion 13.

When the first resin material 3 is heated to join the plate members 1 and 2 in order to manufacture the vacuum heat insulating panel 100, a temperature around the first outer edge plate portion 12 is about 200°C, a temperature around the first main plate portion 11 is about 20°C, and a large temperature difference occurs, and a difference in thermal expansion becomes large, and thus strain is likely to occur in the first plate member 1. In a case of not taking measures against this strain, internal stress continuously acts to increase the strain over time by creeping, and finally, the first resin material 3 may be peeled off from the plate members 1 and 2.

According to the present modification, by providing the bending portion T in the second plate member 2, the second plate member 2 can deform following the deformation accompanying the heating of the first plate member 1, and wrinkles and cracks are less likely to occur on the surface or the like of the second plate member 2. Accordingly, a decrease in the heat insulating property of the vacuum heat insulating panel 100 can be prevented.

The bending portion T is separated from the standing plate portion 13, for example. In this case, thermal conduction due to contact with the standing plate portion 13 (the first plate member 1) does not occur, and deformation that does not follow the deformation of the standing plate portion 13, such as thermal expansion of the bending portion T itself, can be reduced. Accordingly, a further decrease in the heat insulating property of the vacuum heat insulating panel 100 can be prevented.

Regarding dimensions of the bending portion T, for example, a width of a bent protrusion or groove is about 1 mm, and a height of the bent protrusion or groove is about 2 mm to 3 mm.

### (Second Modification of Vacuum Heat Insulating Panel 100)

### <First Resin Material 3>

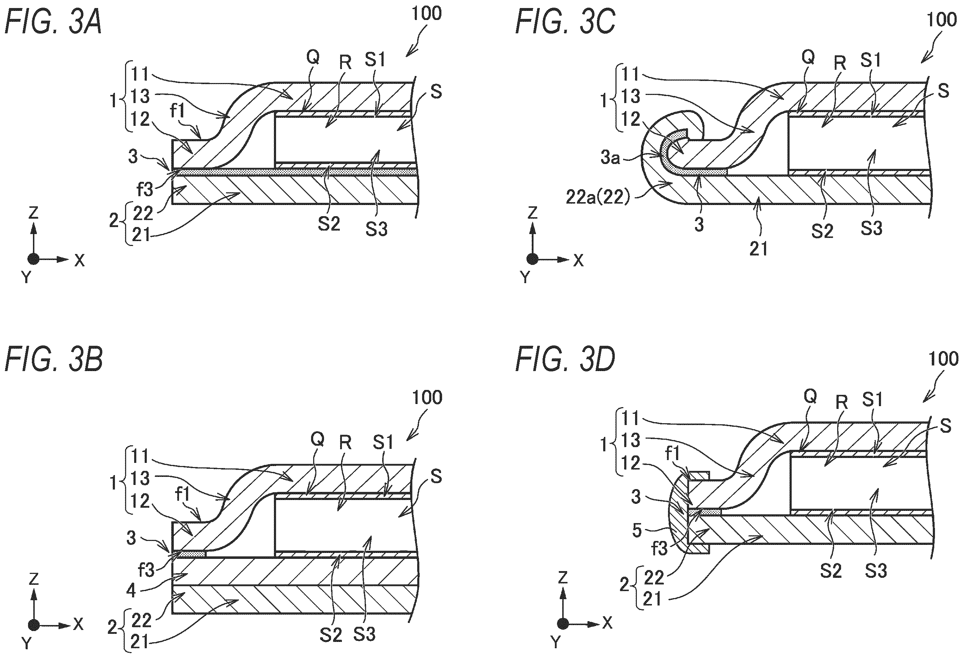

For example, as illustrated in Fig. 3A, the first resin material 3 is provided on the entire surface (the second main plate portion 21 and the second outer edge plate portion 22) of the second plate member 2 facing the first plate member 1, whereby workability of coating the surface of the second plate member 2 is improved, and a manufacturing cost can be reduced. Flexibility of the arrangement of the first plate member 1 is improved. Accordingly, the manufacturability of the vacuum heat insulating panel 100 can be improved.

### (Third Modification of Vacuum Heat Insulating Panel 100)

<Vacuum Heat Insulating Panel 100> For example, as illustrated in Fig. 3B, the vacuum heat insulating panel 100 may further include a second resin material 4.

### <Second Resin Material 4>

The second resin material 4 is made of, for example, a resin having a thermal conductivity lower than that of the first resin material 3 among plastics (synthetic resins) described in ISO1043-1 or JIS K 6899-1. As the second resin material 4, for example, a silicon resin is used.

The second resin material 4 is interposed between the first resin material 3 and the second plate member 2, for example. In this case, as compared with the case in which only the first resin material 3 is interposed, a thickness of the resin material is easily secured, and heat is less likely to be conducted between the plate members 1 and 2. Accordingly, the heat insulating property of the vacuum heat insulating panel 100 can be improved. A melting point of the second resin material 4 may be higher than that of the first resin material 3. In this case, the second resin material 4 is less likely to melt than the first resin material 3 and is less likely to evaporate when the first resin material 3 is heated, which makes it easy to prevent the influence on the vacuum state of the internal space Q. Accordingly, a decrease in the heat insulating property of the vacuum heat insulating panel 100 can be prevented.

### (Fourth Modification of Vacuum Heat Insulating Panel 100)

### <Vacuum Heat Insulating Panel 100>

In the vacuum heat insulating panel 100, for example, as illustrated in Fig. 3C, an outer edge bending portion 22a may be formed by plastically deforming and caulking the first outer edge plate portion 12 and the second outer edge plate portion 22. In this case, the plate members 1 and 2 can be more firmly joined to each other as compared with a case in which the plate members 1 and 2 are joined only by the first resin material 3. Accordingly, the durability of the vacuum heat insulating panel 100 can be improved.

When forming the outer edge bending portion 22a, a resin bending portion 3a may be formed by deforming the first resin material 3 in the same manner with the second outer edge plate portion 22. In this case, the first resin material 3 is included in the outer edge bending portion 22a, and the plate members 1 and 2 can be more firmly joined. Accordingly, the durability of the vacuum heat insulating panel 100 can be further improved.

### (Fifth Modification of Vacuum Heat Insulating Panel 100)

### <Vacuum Heat Insulating Panel 100>

For example, as illustrated in Fig. 3D, a protective material 5 that protects the first outer edge plate portion 12, the second outer edge plate portion 22, and the first resin material 3 may be attached to the vacuum heat insulating panel 100. In this case, a joint portion of the plate members 1 and 2 is less likely to be affected by an external environment. Accordingly, the durability of the vacuum heat insulating panel 100 can be improved.

As a material for the protective material 5, for example, a known molding material may be used, and a resin molding material may be used. The protective material 5 is formed, for example, in an U-shape in cross section, and holds the first outer edge plate portion 12 and the second outer edge plate portion 22 by sandwiching the two on both sides of the U-shape. The protective material 5 may be formed by solidifying a film formed by dip coating an adhesive material such as wax or latex.

### (Sixth Modification of Vacuum Heat Insulating Panel 100)

### <Spacer S>

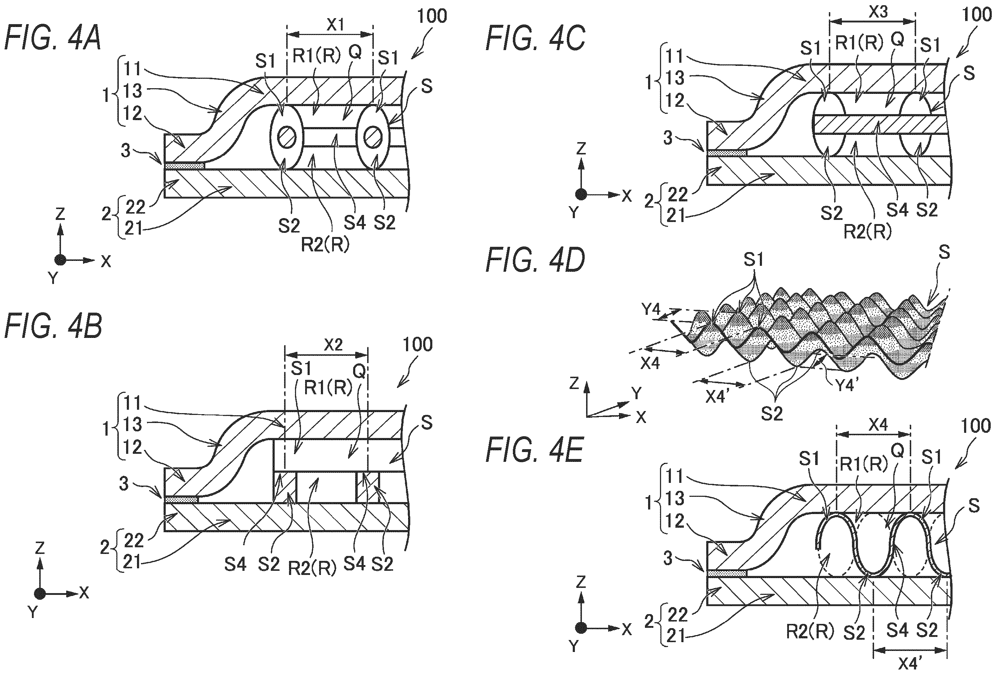

For example, as illustrated in Fig. 4A, the spacer S includes the first support portions S1 that support the first plate member 1, the second support portions S2 that support the second plate member 2, and a coupling portion S4 that couples the support portions S1 and S2 to each other.

For example, with a grid-shaped coupling portion S4 serving as a base material, the spacer S includes, at each intersection of the grid, the first support portions S1 each protruding toward the first plate member 1 and the second support portions S2 each protruding toward the second plate member 2. That is, in the spacer S, with respect to one first support portion S1, the plurality of first support portions S1 are coupled via the coupling portion S4, and with respect to one second support portion S2, the plurality of second support portions S2 are coupled via the coupling portion S4. In this case, the stress acting on the plate members 1 and 2 can be dispersed by the plurality of support portions S1 and S2. Accordingly, the durability of the vacuum heat insulating panel 100 can be improved.

In addition, it is possible to prevent the support portions S1 and S2 from concentrating on a portion while reducing a material cost as compared with a case of using a flat plate-shaped coupling portion S4. Accordingly, the manufacturability of the vacuum heat insulating panel 100 can be improved.

The spacer S forms the hollow space R by forming a hollow space R1 between the plurality of first support portions S1, the first plate member 1, and the coupling portion S4, and forming a hollow space R2 between the plurality of second support portions S2, the second plate member 2, and the coupling portion S4, for example.

At this time, the first support portion S1 supports the inner surface of the first plate member 1 by, for example, a convex surface. The second support portion S2 supports the inner surface of the second plate member 2 by, for example, a convex surface. That is, the support portions S1 and S2 support the first plate member 1 and the second plate member 2 in point, respectively. In this case, the vacuum layer can be formed with a larger volume in the hollow space R. Accordingly, the heat insulating property of the vacuum heat insulating panel 100 can be further improved.

Regarding dimensions of the spacer S, for example, a width X1 between the adjacent first support portions S1 and the adjacent second support portions S2 along the first direction X is about 20 mm to 30 mm, and a width between the adj acent first support portions S1 and the adj acent second support portions S2 along the second direction Y is about 20 mm to 30 mm.

As an example of the spacer S, for example, a known knotted net having a grid shape in which warps and wefts intersect may be used. At this time, the support portions S1 and S2 are implemented by knots of the knotted net. In this case, the time and effort for adjusting an arrangement of the spacers S can be reduced. Accordingly, the manufacturability of the vacuum heat insulating panel 100 can be improved.

### (Seventh Modification of Vacuum Heat Insulating Panel 100)

### <Spacer S>

For example, as illustrated in Fig. 4B, the spacer S may have a net shape in which a plurality of meshes intersect. The spacer S is, for example, a net having a grid shape in which the first support portions S1 each serving as a weft extending along the first direction X and the second support portions S2 each serving as a warp extending along the second direction Y intersect each other. The coupling portions S4 each couple the support portions S1 and S2 at intersections of the warps and the wefts. In this case, the first support portion S1 and the second support portion S2 support each other along the thickness direction Z. Here, the grid shape includes, in addition to a long rectangular grid, a triangular grid, a hexagonal grid, a honeycomb structure, or the like. In the spacer S, the weft and the warp may alternately form the first support portion S1 and the second support portion S2 by being alternately woven.

That is, in the spacer S, with respect to one first support portion S1, the plurality of second support portions S2 are coupled via the coupling portion S4, and with respect to one second support portion S2, the plurality of first support portions S1 are coupled via the coupling portion S4. In this case, the stress acting on the plate members 1 and 2 can be dispersed by the plurality of support portions S1 and S2. Accordingly, the durability of the vacuum heat insulating panel 100 can be improved.

The spacer S forms the hollow space R by forming the hollow space R1 between the plurality of first support portions S1 and the plate members 1 and 2, and forming the hollow space R2 between the plurality of second support portions S2 and the plate members 1 and 2, for example.

Regarding dimensions of the spacer S, for example, a width X2 between the adjacent second support portions S2 along the first direction X is about 20 mm to 30 mm, and a width between the adjacent first support portions S1 along the second direction Y is about 20 mm to 30 mm.

Examples of the type of the woven net used for the spacer S include a plain woven net, a leno weave net, a raschel woven net, a minnow net, and a tin line net. The spacer S may be a knotless net.

The spacer S may be a plastic net in which the first support portion S1, the second support portion S2, and the coupling portion S4 are integrally molded by extrusion molding, cutting, pressing, or the like of a resin (polyethylene, polypropylene, polyvinyl chloride, or the like). In this case, the mesh of the spacer S is hardly broken, and the stress acting on the plate members 1 and 2 is easily dispersed. Accordingly, the durability of the vacuum heat insulating panel 100 can be improved. In addition, the time and effort for adjusting an arrangement of the spacers S can be reduced. Accordingly, the manufacturability of the vacuum heat insulating panel 100 can be improved.

Examples of the spacer S include "NAXA (registered trademark)", "NETLON (registered trademark) SHEET", and "TRICAL NET (registered trademark)".

The spacer S may be formed in a grid shape in a manner that the first support portion S1 having a plate shape or a bar shape extending along the first direction X and the second support portion S2 having a plate shape or a bar shape extending along the second direction Y intersect each other

### (Eighth Modification of Vacuum Heat Insulating Panel 100)

### <Spacer S>

For example, as illustrated in Fig. 4C, with a flat plate-shaped coupling portion S4 serving as a base material, the spacer S includes, on a surface of the flat plate shape, the first support portions S1 each protruding toward the first plate member 1 and the second support portions S2 each protruding toward the second plate member 2. In this case, as compared with the case in which the grid-shaped coupling portion S4 is used, the support portions of the support portions S1 and S2 are less likely to be displaced, and the stress acting on the plate members 1 and 2 is more easily dispersed. Accordingly, the durability of the vacuum heat insulating panel 100 can be improved. In addition, the time and effort for adjusting an arrangement of the spacers S can be reduced. Accordingly, the manufacturability of the vacuum heat insulating panel 100 can be improved.

The spacer S forms the hollow space R by forming the hollow space R1 between the plurality of first support portions S1, the first plate member 1, and the coupling portion S4, and forming the hollow space R2 between the plurality of second support portions S2, the second plate member 2, and the coupling portion S4, for example.

Regarding dimensions of the spacer S, for example, a width X3 between the adjacent first support portions S1 and the adjacent second support portions S2 along the first direction X is about 20 mm to 30 mm, and a width between the adj acent first support portions S1 and the adj acent second support portions S2 along the second direction Y is about 20 mm to 30 mm.

In the spacer S, for example, by performing pressing or embossing on a flat plate-shaped thermoplastic resin, the support portions S1 and S2 may be formed on both surfaces of the flat plate shape.

As an example of the spacer S, for example, "Raku-Raku road" manufactured by Katsulon Co., Ltd..

### (Ninth Modification of Vacuum Heat Insulating Panel 100)

<Spacer S > For example, as illustrated in Figs. 4D and 4E, the spacer S may have a shape in which the plurality of first support portions S1 and the plurality of second support portions S2 provided along a planar direction including the first direction X and the second direction Y are alternately provided in a cross-sectional view and are coupled to each other via the coupling portions S4, that is, a shape in which a surface of the spacer S is uneven like a wave. The spacer S includes the first support portions S1 each protruding toward the first plate member 1, the second support portions S2 each protruding toward the second plate member 2, and the coupling portions S4 each coupling the first support portion S1 and the second support portion S2. Each of the support portions S1 and S2 is implemented with a convex surface, and can support the first plate member 1 and the second plate member 2 at a point at a vertex of the convex surface.

Regarding dimensions of the spacer S, as illustrated in Fig. 4D, for example, a width X4 between the adjacent first support portions S1 along the first direction X is about 20 mm to 30 mm, and a width Y4 between the adjacent first support portions S1 along the second direction Y is about 20 mm to 30 mm. A width X4' between the adjacent second support portions S2 along the first direction X is about 20 mm to 30 mm, and a width Y4' between the adjacent second support portions S2 along the second direction Y is about 20 mm to 30 mm.

For example, as illustrated in Fig. 4E, the spacer S forms the hollow space R by forming the hollow space R1 between the plurality of first support portions S1, the first plate member 1, a surface opposite to the second support portion S2 (a surface facing the first plate member 1), and the coupling portion S4, and forming the hollow space R2 between the plurality of second support portions S2, the second plate member 2, a surface opposite to the first support portion S1 (a surface facing the second plate member 2), and the coupling portion S4.

### (Manufacturing Method of Vacuum Heat Insulating Panel 100)

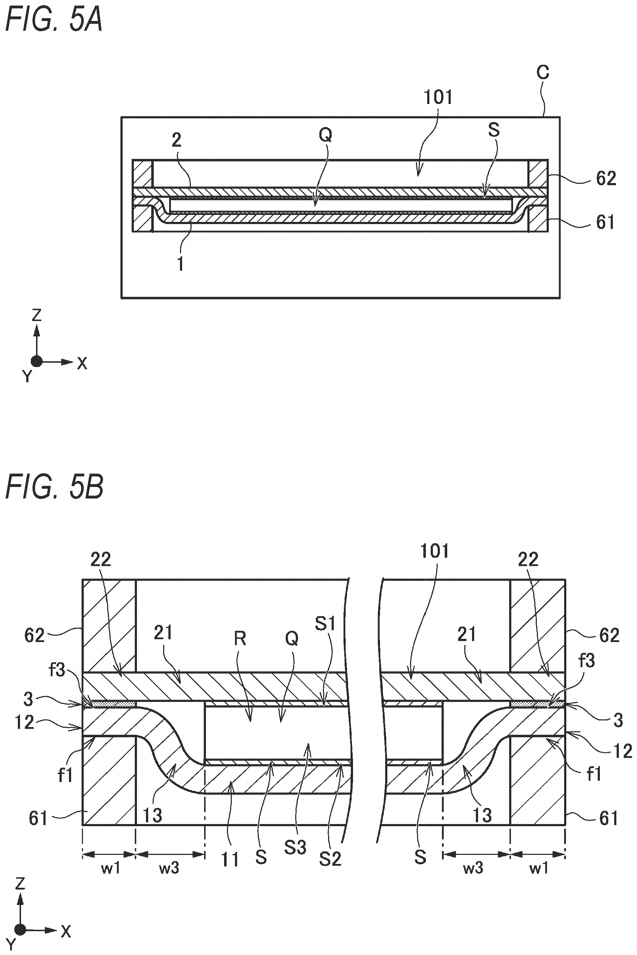

Next, an example of a manufacturing method of the vacuum heat insulating panel 100 described above will be described with reference to Figs. 5A and 5B.

First, as illustrated in Figs. 5A and 5B, the first plate member 1 is disposed on a hollow conductive tray 61 in a manner that all of sides of the first main surface f1 of the first outer edge plate portion 12 come into contact with the conductive tray 61 and the standing plate portion 13 rises toward the inside of the conductive tray 61. After the spacer S is disposed on the inner surface side of the first main plate portion 11, the second plate member 2 to which the first resin material 3 is coated is disposed above the first plate member 1 in a manner that the third main surface f3 of the first outer edge plate portion 12 and the first resin material 3 face each other. At this time, in order to evacuate the internal space Q, for example, an electric wedge (not illustrated) that can be operated is interposed between the first outer edge plate portion 12 and the second outer edge plate portion 22, and a gap that communicates the internal space Q with the external environment is formed between the first outer edge plate portion 12 and the second outer edge plate portion 22. Installation of a pre-vacuuming panel 101 is thus completed.

Depending on the thickness of the spacer S in the thickness direction Z, the contact between the first outer edge plate portion 12 and the second outer edge plate portion 22 of the second plate member 2 may not be good, and thus a conductive tray 62 having the same material and shape as the conductive tray 61 may be disposed above the second plate member 2. In this case, the first outer edge plate portion 12 and the second outer edge plate portion 22 are sandwiched between the conductive trays 61 and 62, and thus the first outer edge plate portion 12 and the second outer edge plate portion 22 are favorably brought into contact with each other, and the sealability of the internal space Q is easily improved.

Further, after the pre-vacuuming panel 101 in a state in which the gap is formed between the first outer edge plate portion 12 and the second outer edge plate portion 22 is accommodated in the vacuum chamber C together with the conductive trays 61 and 62, the inside of the vacuum chamber C is evacuated. At this time, the internal space Q and the inside of the vacuum chamber C communicate with each other, and thus as the inside of the vacuum chamber C is evacuated, the internal space Q is also evacuated. After the internal space Q becomes vacuum, the electric wedge (not illustrated) is operated from the outside of the vacuum chamber C while maintaining the inside of the vacuum chamber C in vacuum, and the wedge is removed from between the first outer edge plate portion 12 and the second outer edge plate portion 22. At this time, the second plate member 2 loses support from the electric wedge and falls onto the first plate member 1. Accordingly, the first outer edge plate portion 12 and the second outer edge plate portion 22 can be brought into contact with each other without a gap while maintaining the internal space Q in vacuum.

Thereafter, an external power source (not illustrated) is electrically connected to the conductive trays 61 and 62 to supply power to the conductive trays 61 and 62. As a result, the first resin material 3 is heated via the first outer edge plate portion 12 of the first plate member 1 and the second outer edge plate portion 22, and the first outer edge plate portion 12 and the second outer edge plate portion 22 are electrically welded. Accordingly, even after the first plate member 1 and the second plate member 2 are taken out of the vacuum chamber C, the internal space Q is maintained in vacuum. The first outer edge plate portion 12 and the second outer edge plate portion 22 may be welded after the first plate member 1 and the second plate member 2 are taken out of the vacuum chamber C. Examples of a welding method may include, but are not limited to, laser welding, resistance welding, and arc welding. Here, electric welding is used, but the welding method is not limited to electric welding as long as the first resin material 3 can be heated.

According to the above procedure, the manufacturing of the vacuum heat insulating panel 100 is completed. The vacuum heat insulating panel 100 can be manufactured more efficiently by further laminating the conductive trays 61 and 62 and the pre-vacuuming panel 101 in a vertical direction and simultaneously performing electrical welding.

A jack (not illustrated) may be further disposed above the second plate member 2, and the conductive trays 61 and 62 may be pressed from above during electrical welding. In this case, the first outer edge plate portion 12 and the second outer edge plate portion 22 are firmly sandwiched between the conductive trays 61 and 62, and thus the first outer edge plate portion 12 and the second outer edge plate portion 22 are more favorably brought into contact with each other, and the sealability of the internal space Q is more easily improved. When the conductive trays 61 and 62 and the pre-vacuuming panel 101 are further laminated in the vertical direction, the respective panels can be reliably sandwiched. Further, the first outer edge plate portion 12 and the second outer edge plate portion 22 may be welded after the first plate member 1 and the second plate member 2 are taken out of the vacuum chamber C. Accordingly, manufacturing efficiency and quality of the vacuum heat insulating panel 100 can be improved.

According to the present embodiment, the first resin material 3 having a gas barrier property is interposed between the first outer edge plate portion 12 of the first plate member 1 made of metal and the second outer edge plate portion 22 of the second plate member 2 made of metal. That is, the metal plates can be joined to each other at a temperature lower than a welding temperature. Therefore, the metal plate members 1 and 2 can be joined to each other with a lower cost and a shorter time than a case in which a welding tool is used in a vacuum chamber. Accordingly, the manufacturability of the vacuum heat insulating panel 100 can be improved. In the first plate member 1, the standing plate portion 13 is formed by a curved surface. Therefore, an external pressure applied to the first plate member 1 is easily released by a shell structure. Accordingly, the durability of the vacuum heat insulating panel 100 can be improved. Further, the first outer edge plate portion 12 and the second outer edge plate portion 22 can be more firmly joined by welding the first outer edge plate portion 12 and the second outer edge plate portion 22 after the first plate member 1 and the second plate member 2 are joined and taken out of the vacuum chamber C.

According to the present embodiment, the spacer S is a resin material and is separated from the first outer edge plate portion 12 and the second outer edge plate portion 22. Therefore, while the plate members 1 and 2 are supported by the spacer S made of the resin material having a thermal conductivity lower than that of metal, heat is less likely to be conducted from the outer edge side to the spacer S during joining the plate members 1 and 2, and thus the spacer S is less likely to be deformed or evaporated in the internal space Q. Accordingly, it is possible to improve the manufacturability while improving the heat insulating property of the vacuum heat insulating panel 100.

According to the present embodiment, the second resin material 4 having a thermal conductivity lower than that of the first resin material 3 is interposed between the first outer edge plate portion 12 and the second outer edge plate portion 22. Therefore, a thickness of the resin material is easily secured, and heat is less likely to be conducted between the plate members 1 and 2. Accordingly, the heat insulating property of the vacuum heat insulating panel 100 can be improved. In a case in which the melting point of the second resin material 4 is higher than the melting point of the first resin material 3, the second resin material 4 is less likely to melt than the first resin material 3 and is less likely to evaporate when the first resin material 3 is heated, which makes it easy to prevent the influence on the vacuum state of the internal space Q. Accordingly, a decrease in the heat insulating property of the vacuum heat insulating panel 100 can be prevented.

According to the present embodiment, the spacer S includes the plate-shaped second support portion S2 extending along the second plate member 2 in a manner of forming the hollow space R between the second support portion S2 and the first support portion S1 and configured to support the second plate member 2, and the third support portion S3 extending in one direction and is integrally molded with the first support portion S1 and the second support portion S2. Therefore, a vacuum layer can be formed in the hollow space R. Accordingly, the heat insulating property of the vacuum heat insulating panel 100 can be improved. In addition, the first support portion S1, the second support portion S2, and the third support portion S3 can be easily manufactured by extrusion molding or the like. Accordingly, the manufacturability of the vacuum heat insulating panel 100 can be further improved.

According to the present embodiment, the first resin material 3 is interposed only between the first outer edge plate portion 12 and the second outer edge plate portion 22. Therefore, it is easy to prevent an influence on a vacuum state of the internal space Q due to heating and evaporating of the first resin material 3. Accordingly, a decrease in the heat insulating property of the vacuum heat insulating panel 100 can be prevented.

According to the present embodiment, the second plate member 2 includes the bending portion T bent between the first outer edge plate portion 12 and the spacer S. Therefore, the second plate member 2 can be deformed following deformation accompanying heating of the first plate member 1, and wrinkles and cracks are less likely to occur. Accordingly, a decrease in the heat insulating property of the vacuum heat insulating panel 100 can be prevented.

While certain embodiments of the present disclosure have been described, these embodiments have been presented by way of example only, and are not intended to limit the scope of the present disclosure. These new embodiments can be implemented in various other forms, and various omissions, substitutions, and changes can be made without departing from the spirit of the present disclosure. The accompanying claims and their equivalents are intended to cover such forms or modifications as would fall within the scope and spirit of the present disclosures.

## Claims

1. A vacuum heat insulating panel in which a pair of plate members face each other in a manner that an internal space is formed between the plate members, comprising:
a first plate member made of metal;
a second plate member made of metal and configured to form an internal space between the first plate member and the second plate member; and
a spacer configured to support the first plate member and the second plate member from the internal space side, wherein:
the first plate member includes a first outer edge plate portion on an outer edge side, a standing plate portion standing from the first outer edge plate portion and formed by a curved surface, and a main plate portion continuous from the standing plate portion and supported by the spacer; and
a first resin material having a gas barrier property is interposed between the first outer edge plate portion and a second outer edge plate portion on an outer edge side of the second plate member

2. The vacuum heat insulating panel according to claim 1, wherein
the spacer is a resin material and is separated from the first outer edge plate portion and the second outer edge plate portion.

3. The vacuum heat insulating panel according to claim 1 or 2, wherein
a second resin material having a thermal conductivity lower than that of the first resin material is interposed between the first outer edge plate portion and the second outer edge plate portion.

4. The vacuum heat insulating panel according to claim 1 or 2, wherein:
the spacer includes:
a plate-shaped first support portion extending along the first plate member and configured to support the first plate member;
a plate-shaped second support portion extending along the second plate member in a manner of forming a hollow space between the second support portion and the first support portion and configured to support the second plate member; and
a plurality of third support portions configured to support the first support portion and the second support portion from the hollow space side; and
the plurality of third support portions extend in one direction and are integrally molded with the first support portion and the second support portion.

5. The vacuum heat insulating panel according to claim 1 or 2, wherein
the first resin material is interposed only between the first outer edge plate portion and the second outer edge plate portion.

6. The vacuum heat insulating panel according to claim 1 or 2, wherein
the second plate member includes a bending portion bent between the first outer edge plate portion and the spacer

7. The vacuum heat insulating panel according to claim 1, wherein
the first outer edge plate portion and the second outer edge plate portion are welded by the first resin material.

8. The vacuum heat insulating panel according to claim 7, wherein
the first outer edge plate portion and the second outer edge plate portion are welded.
